# EUROPEAN PATENT SPECIFICATION

(11) **EP 2 930 343 B1**
(45) Date of publication and mention of the grant of the patent: **22.08.2018**
(21) Application number: 14853150.2
(22) Date of filing: 04.04.2014
(51) Int. Cl.: F02M 35/10, F02B 27/02, F02B 33/44

(54) **INTERNAL COMBUSTION ENGINE COMPRISING A PRESSURE DISTRIBUTION CHAMBER WITH MULTIPLE INDEPENDENT INTAKES**
VERBRENNUNGSMOTOR MIT EINER DRUCKVERTEILUNGSKAMMER MIT MEHREREN UNABHÄNGIGEN ZULEITUNGEN
MOTEUR À COMBUSTION INTERNE À CHAMBRE DE DISTRIBUTION DE PRESSION À ADMISSIONS MULTIPLES INDÉPENDANTES

(30) Priority: 02.01.2014 ES 201430003
(43) Date of publication of application: 14.10.2015
(73) Proprietor: Nairex Business S.L., 44600 Alcañiz (Teruel) (ES)
(72) Inventor: ARMANDO ANTONIO, Blasco Gil, 44600 Alcañiz (Teruel) (ES)
(74) Representative: Monzón de la Flor, Luis Miguel
(86) International application number: PCT/ES2014/070266
(87) International publication number: WO 2015/101684

(56) References cited:
- EP-A1- 0 713 964
- EP-A1- 1 489 283
- WO-A1-2011/070395
- ES-T3- 2 216 387
- JP-A- S 648 317
- JP-A- S5 874 825
- JP-A- S59 218 357
- US-A- 4 774 812
- US-A- 4 774 812
- US-A- 4 998 951
- US-A- 5 027 769
- US-A- 5 819 538
- US-A- 5 819 538
- US-A1- 2007 234 992
- US-A1- 2009 235 663

## Description

### OBJECT OF THE INVENTION

The present invention relates to an internal combustion engine with pressure distribution chamber with multiple independent intakes, where each one of the multiple intakes operates and can be selected individually, and any combination thereof can even be selected.

The present invention is characterized in that it provides an internal combustion engine in at least one of its combustion chambers with a pressure distribution chamber with at least two intakes of air or of mixture of independent operation and selection, one with respect to the other(s), being able to work in combined form.

Therefore, the present invention is included within the field of internal combustion engines and, more particularly, among the engine supply systems and, more precisely, among pressure distribution chambers.

### BACKGROUND OF THE INVENTION

The currently existing engines make, using different means, the same pressure reach each combustion chamber and the same amount of air or mixture in each throttle position, since existing engines are single intake.

In atmospheric engines, there is usually a single air uptake, comprising: an air uptake, then a filter, then a throttle and idle butterfly, and an air quantity sensor, with the aim of controlling the corresponding petrol injection, followed by a pressure distribution chamber wherefrom the manifolds emerge.

Fuel injection according to the engines can generally be indirect, performed in the intake manifold, or direct injection, being performed in the combustion chamber or both, operating one or the other depending on the engine design.

In all these engines, the air or mixture that reaches each chamber does so at the same pressure and with the same volume, to each opening position of the throttle butterfly.

Pressurized air engines by turbo, volumetric compressor, reloadable fixed-pressure reservoir generally comprise: one air uptake per pressure apparatus, followed by a pressure system, etc., a possible radiator or "intercooler" wherethrough the hot air is made to pass to cool it, then there is a throttle-idle nut, followed by an air flow sensor and at least one pressure distribution chamber (according to engine type) to unify the pressure wherefrom the manifolds exit to the combustion chambers.

In these turbo engines, the air or the mixture that reaches each combustion chamber with the same throttle position does so at the same pressure and with the same volume.

In some cases, there may be two or more turbos, each one of them having a different air inlet or sharing the same inlet; generally they have a single throttle butterfly but, in the end, the same amount of air or mixture enters each one of the combustion chambers, as in the previous cases.

Therefore, the engines known in the state of the art have a single intake system, designed in accordance with the engine power. Hence, an engine for a certain power has the following design: air pressure and volume, the total opening of the throttle valve and fuel injection for said power. For this reason, an engine with greater power has higher consumption at lower speed, than an engine of less power at the same cylinder capacity.

In other words, the engines of the state of the art are limited by the power, torque and revolutions of the design, and it is not possible to change the power for which they have been designed. Thus, an engine with less power shall consume less but it will have a lower overtaking capacity, whilst an engine with greater power will consume more at a lower speed but will have a greater overtaking capacity.

Document US5027769 A relates to a throttle valve control apparatus of a so called drive by wire (DBW) type which drives a throttle valve to open and close an air intake passage of an engine by a motor. Throttle valves are individually disposed in a plurality of intake passages of an engine. Also, intake passages of the engine are divided into two systems and are individually connected with surge tanks.

Document US5027769 A discloses a turbocharged engine air supply system for eliminating turbo lag in an internal combustion engine that includes an air tank containing a pressurized auxiliary air supply which is used to raise manifold pressure promptly during periods of turbo lag, an air pump connected with the engine crankshaft for filling the air tank with compressed air during deceleration and during other periods of operation when it is not necessary to devote all of the engine torque to the driveline, a first valve for controlling the flow of auxiliary air from the air tank to the engine, and a second valve for recirculating turbocharged air when auxiliary air is being supplied to the engine, thereby allowing the turbocharger to accelerate more quickly.

Document EP1489283 discloses an engine that has a discharging duct with an inlet through which supercharged air enters for supplying inserts through orifices of the discharging duct and for supplying inserts through orifices of an injecting duct by a pipe. The supercharged air is supplied for obtaining a series circulation of the supercharged air from the discharging duct towards the injecting duct.

Document WO2011 /070935 relates to an air intake system for engines with four cylinders or more, which has a low production cost and is easy to implement. It allows the separation or combination of cylinder intake, and hence the operation as a single conventional engine or as two or more independent two-cylinder engines, optimising the performance of internal combustion engines.

In consequence, an atmospheric engine cannot be a turbo or the other way round or acting in combined manner, nor can it make more or less amount of air penetrate with the same throttle position and, therefore, have lower consumption less CO2 emissions and better performance.

Therefore, the object of the present invention is to develop an internal combustion engine which offers a multiplicity of operating possibilities, giving rise to different power ranges, being able to select or combine the different operating forms, developing an internal combustion engine such as that described below and which is essentially set down in claim one.

### DESCRIPTION OF THE INVENTION

The present invention has the object of resolving the stated problem, by a pressure distribution chamber with multiple independently operating intakes and each one of the intakes can be selected either in individual or combined manner, in short achieving a multiple-power engine with the same cylinder capacity, and therefore other ranges of consumptions and reduction in CO2 emission from 0 to maximum revolutions, in short, achieve with a single engine that it can operated as if it had different selectable powers.

The objective of the invention is to design an engine that works and performs like different engines, both in terms of maximum power and torque or revolutions, with the objective of adapting the consumption and CO2 emission to each circumstance, so that the amount of air supplied to each combustion chamber will depend on the power required in each circumstance and, in consequence, the amount of fuel injected and the CO2 expulsed shall be in accordance with the amount of air supplied.

Therefore, according to the invention, the pressure distribution chamber of the engine will have two or more intakes of independent or combined operation and selection, which may have the same or different section.

The pressure distribution chamber can be directly connected to the combustion chambers, for which it will have a series of outlets integrated in the chamber for their connection to the combustion chambers, in this way avoiding the use of a manifold.

The pressure distribution chamber has multiple compartments, in which case it will have flow control means between the compartments from the intakes, as well as outlet control means from each compartment towards another or directly towards the entry to the combustion chamber by butterfly gates, pipes, etc.

The multiple intakes that the pressure distribution chamber of the internal combustion engine has can be selected by the driver individually or in combined manner, i.e. in the case of two independent intakes the driver can select one of the intakes, which shall be designed for a certain power, or select a second intake, which will be designed for a second power, different to the previous one, or select both intakes with the same or different butterfly opening to achieve a different effect. In short, an engine is achieved with a multiplicity of different powers and, in consequence, features.

The maximum amount of air supplied to each combustion chamber from the pressure distribution chamber will be in accordance with the selected intakes.

According to a possible embodiment, all or part of the air intakes or inlets may start from a common air uptake chamber, which will have an air inlet, provided with the corresponding filter, which will always give us the same air pressure although with the same or different capacity.

According to another embodiment each one of the independent intakes may have its own air intake, which would allow, for example that one of the intakes was atmospheric, another of the intakes was by pressurized air, through any of the known systems, such as turbo, volumetric compressor, and another through an air reservoir or mixture at fixed or reloadable pressure, etc., or any of the multiple combinations that a technician could resort to. In this way, air is introduced at different pressure or volume through each independent intake selected and, therefore, different amount of air per unit of time, and in consequence, different amount of fuel.

The selection of the independent intake chosen or the desired combination of independent intakes could be performed manually from the driver's seat or automatically if desired to be designed in this way.

Thanks to the system described, we will obtain various powers with the same cylinder capacity, engine consumptions and less CO2 emissions with the same stroke of the throttle, only by selecting or combining the different independently operating intakes that the engine has.

Each one of the intakes may also have its corresponding fuel injector, which will come into operation when the corresponding intake is selected for the air supply.

The throttle and idle butterfly valves that the independent intakes have are moved by the throttle and are to be able to introduce air or air-fuel in different amount, rate and pressure, and thus be able to vary the performance of the engine as required.

When it changes from one intake to another, the throttle and idle butterfly valves that the starter intake has remain closed, with the throttle and idle butterfly valves of the selected intake remaining operational.

In consequence, thanks to the system of multiple independent intakes that can be selected in individual or combined form associated to a single distribution chamber, an internal combustion engine is achieved of different powers with the same cylinder capacity, according to the selected intake or intakes, which allows it to obtain different powers, lower consumptions and less CO2 emissions.

Thanks to the disposal of the multiple independent intakes that join together in a pressure distribution chamber with one or several compartments with inlets to the combustion chamber with or without manifold, the construction process is simplified, and the performance is better compared with having the intakes directly connected to the combustion chambers, in addition saving space and facilitating the design and assembly, especially in engines with turbo-compression.

### EXPLANATION OF THE FIGURES

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented.
In figure 1, we can observe a diagram of an internal combustion engine with an intake with pressurized air, either by turbo (4) or by volumetric compressor, which reflects the state of the art.
In figure 2, it shows a pressure distribution chamber whereto three intakes, of different kinds, are connected.
In figure 3 , a possible form of connection with the combustion chambers from a pressure distribution chamber of multiple intakes is shown.
In figure 4, an exemplary embodiment is shown wherein the pressure distribution chamber has several compartments, which is not covered by the invention.
In figure 5, the embodiment according to the invention is shown.
In figure 6 , another exemplary embodiment is shown of the pressure distribution chamber with multiple intakes with multiple compartments, which is not covered by the invention.

### PREFERRED EMBODIMENT OF THE INVENTION

In light of the figures, a preferred embodiment of the invention proposed is described below.

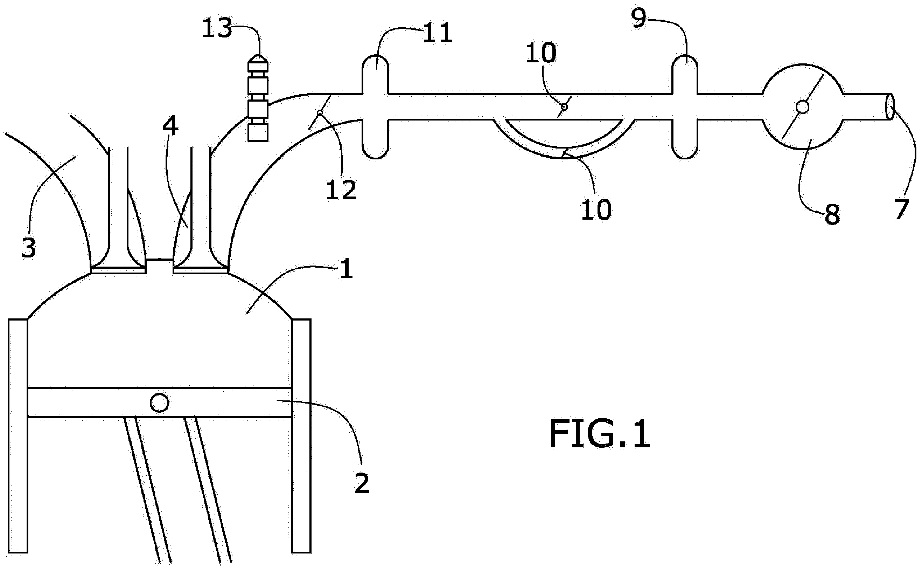

In figure 1 , an internal combustion engine is observed diagrammatically and in cross-section of 2-cylinders with intake manifold, pressure distribution chamber (11), throttle butterfly,(10) intercooler,(9) turbo (8) and air inlet (7); it is the current state of the art. A single intake (4) per engine in this case forced by turbocompressor.

Now, in order to achieve the stated purposes of reducing CO2 emissions, adapting the consumption to the driving type and having the possibility of achieving different powers with a single engine with the same cylinder capacity, for this purpose, multiple intakes are disposed in the pressure distribution chamber each one of which can be selected in individual or combined manner, either of the same or different kind.

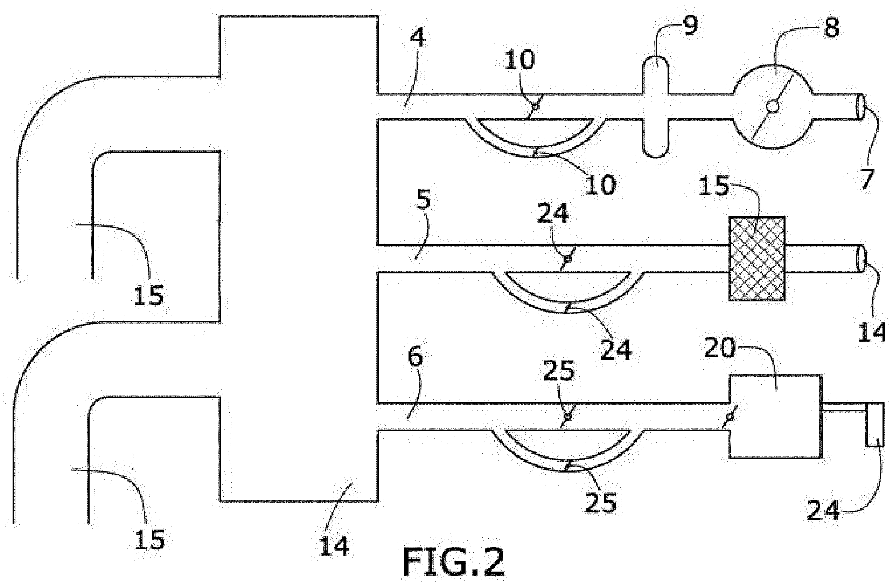

Thus, in figure 2 we observe a pressure distribution chamber (14) reached by three different intakes, a pressurized intake (4), an atmospheric intake (5) and an intake by means of a pressurized air or air-mixture reservoir (6), each one of them having their respective throttle and idle butterfly (10), (24) and (25).

The connection from the pressure distribution chamber (14) towards the combustion chambers (1) can either be performed through a manifold (15), as shown in figure 2 , or through outlets (16) directly created on the pressure distribution chamber (14) allowing the direct connection on the distribution chambers.

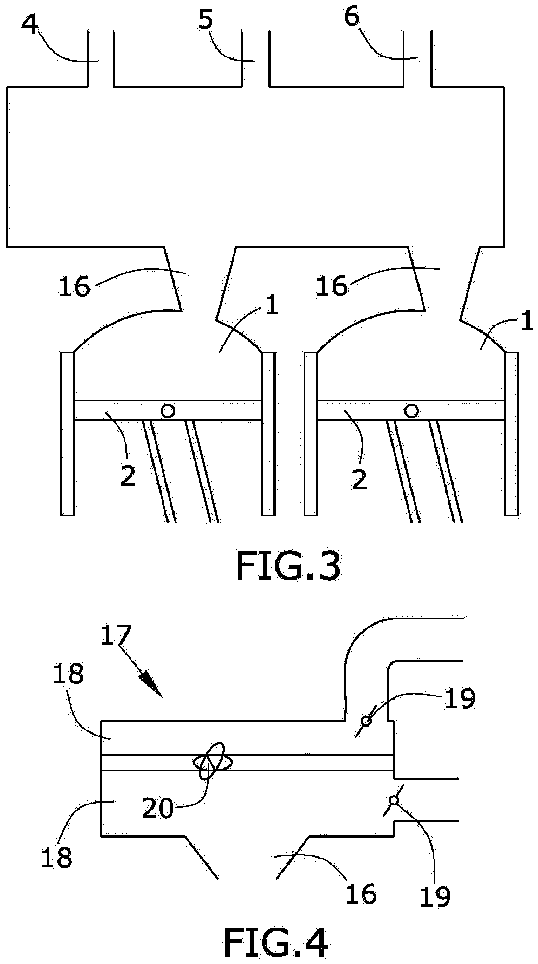

The pressure distribution chamber (14) with multiple intakes may have a single compartment, as shown in figure 4 or be a distribution chamber (17) with multiple compartments (18), as shown in figures 4 , 5 and 6 .

The figures that show a pressure distribution chamber with multiple compartments are only a possible exemplification of among the multiple possible embodiments that could be performed, maintaining the conceptual ideal of compartmentation of the pressure distribution chamber.

In figure 4 , the pressure distribution chamber (17) with two compartments (18) is shown, with at least one intake reaching each compartment. The pressure distribution chamber (17) with multiple compartments has access control means (19) from each one of the intakes to each compartment, as well as flow control means from one compartment to another or directly towards the manifold (15) or outlets (16).

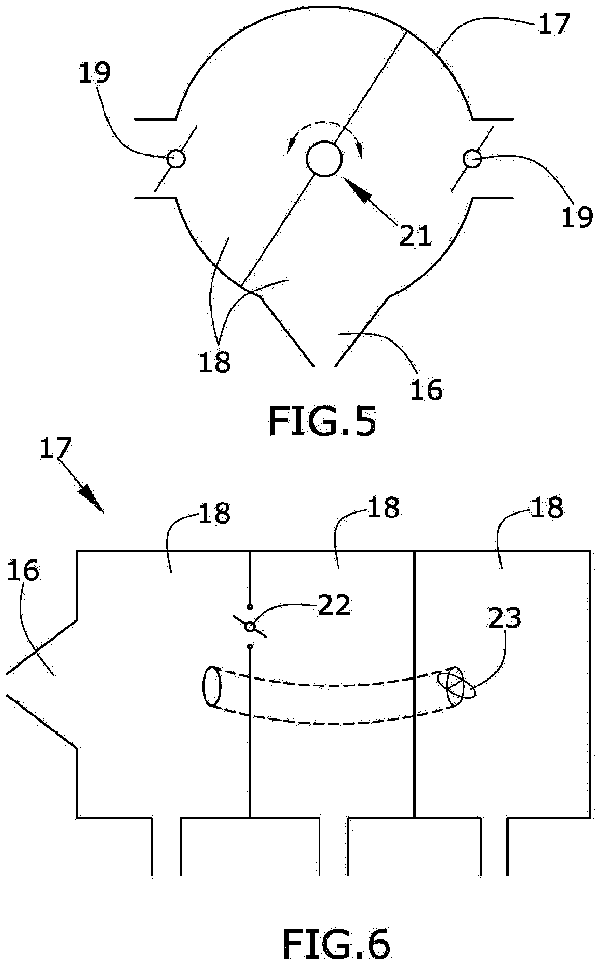

The flow control means of the air or of the air-fuel mixture between compartments, in figure 4 , is a valve (20), whilst in figure 5 the pressure distribution chamber has a circular cross section and it is provided with a rotating clapper (21) which sweeps the interior surface of the chamber so that one compartment or another is selected by rotating the clapper and acting on the flow valves (19) of access from the intakes.

In figure 6 , a pressure distribution chamber (17) with multiple compartments (18) is shown, having a first connection valve (22) from the intermediate compartment to the lower one, and another second connection valve (23) from the upper compartment to the lower one, which is the compartment that is in direct connection with the outlet (16) of the pressure distribution chamber (17), which connects to the combustion chamber or chambers.

The dimensional form, capacity and connection system between the pressure distribution chamber with the combustion chambers shall depend on engine type.

The intakes of the pressure distribution chamber are independent, and they may be selected in independent or combined manner.

The air uptakes or inlets of the independent intakes may have a joint air uptake for all the intakes or there may be independent air inlets or uptakes for each one of the intakes.

There may be one or several fuel injectors either disposed in a possible common junction of said intakes and before the entry to the combustion chamber or in the actual combustion chamber, or in the intake manifolds or in the connection of the pressure distribution chamber with the combustion chamber when there is no manifold, where the operation of the injector or injectors would be in accordance with the selected intakes.

The injectors must be capable of adapting to the different air pressures or volumes of the different intakes or placing an injector per intake per combustion chamber.

There may be any number and type of the independent intakes that join together in the pressure distribution chamber.

To make one intake or another, or both, operate at the same time, they can be made to operate with one throttle per intake or with a single throttle so that whatever system is chosen will make the throttle butterfly of the chosen intake or of the combined choice operate.

## Claims

1. Internal combustion engine with pressure distribution chamber with multiple intakes, wherein the pressure distribution chamber has at least two independently operating intakes and each one of them can be selected in individual or combined manner, wherein the pressure distribution chamber is a pressure distribution chamber (17) with multiple compartments (18), having access control means by means of valves (19) from each one of the intakes to each compartment, and with flow control means from one compartment towards an outlet (16) **characterized in that** the pressure distribution chamber (17) has a circular cross section and it is provided with a rotating clapper (21) which sweeps the interior surface of the chamber so that one compartment or another is selected by rotating the clapper and acting on the access valves (19) from the intakes.

2. Internal combustion engine with pressure distribution chamber with multiple intakes, according to claim 1, wherein one or all the independent intakes are atmospheric.

3. Internal combustion engine with pressure distribution chamber with multiple intakes, according to claim 1, wherein one or all the independent intakes are by pressurized air.

4. Internal combustion engine with pressure distribution chamber with multiple intakes, according to claim 1, wherein one or all the independent intakes is via a reservoir at fixed pressure or reloadable with relief valve that can be regulated either manually or automatically.

5. Internal combustion engine with pressure distribution chamber with multiple intakes, according to any of the preceding claims wherein the pressure distribution chamber (17) is connected with a combustion chamber (1) via a manifold (15).

6. Internal combustion engine with pressure distribution chamber with multiple intakes, according to any of claims 1-5, wherein the pressure distribution chamber is connected with the combustion chamber (1) directly via the outlet (16) defined in the pressure distribution chamber.

7. Internal combustion engine with pressure distribution chamber with multiple intakes, according to claim 1, wherein all the independent intakes have a throttle and idle butterfly valves (10, 24, 25) in addition to the systems inherent to each type of intake.

8. Internal combustion engine with pressure distribution chamber with multiple intakes, according to claim 7, wherein, when it changes from one intake or several intakes to another or others, the butterfly valves of the starter intakes remain closed, with the throttle or butterfly valves (10, 24, 25) of the selected intake or intakes being operational.

9. Internal combustion engine with pressure distribution chamber with multiple intakes, according to claim 7 or 8, wherein the throttle and idle butterfly valves of the independent intakes are moved and are to be able to introduce air or air-fuel in different amounts, rate and pressure, and thus be able to vary the performance of the engine as required.

## Patentansprüche

1. Verbrennungsmotor mit Druckverteilungskammer mit mehreren Einlässen, wobei die Druckverteilungskammer zumindest zwei unabhängig funktionierende Einlässe aufweist und jeder davon einzeln oder kombiniert ausgewählt werden kann, wobei die Druckverteilungskammer eine Druckverteilungskammer (17) mit mehreren Abteilungen (18), die Zugangssteuerungsmittel mithilfe von Ventilen (19) von jedem der Einlässe in jede Abteilung aufweisen, und mit Strömungssteuerungsmitteln von einer Abteilung zu einem Auslass (16) ist, **dadurch gekennzeichnet, dass** die Druckverteilungskammer (17) einen kreisförmigen Querschnitt aufweist und mit einem sich drehenden Klöppel (21) ausgestattet ist, der die Innenfläche der Kammer ausfegt, sodass eine Abteilung oder eine andere durch Drehen des Klöppels und Einwirken auf die Zugangsventile (19) von den Einlässen ausgewählt wird.

2. Verbrennungsmotor mit Druckverteilungskammer mit mehreren Einlässen nach Anspruch 1, wobei ein oder alle unabhängigen Einlässe atmosphärisch erfolgen.

3. Verbrennungsmotor mit Druckverteilungskammer mit mehreren Einlässen nach Anspruch 1, wobei ein oder alle unabhängigen Einlässe durch Druckluft erfolgen.

4. Verbrennungsmotor mit Druckverteilungskammer mit mehreren Einlässen nach Anspruch 1, wobei ein oder alle unabhängigen Einlässe über einen Speicher bei festem Druck oder neu beladbar mit einem Überströmventil erfolgt, das entweder händisch oder automatisch geregelt werden kann.

5. Verbrennungsmotor mit Druckverteilungskammer mit mehreren Einlässen nach einem der vorstehenden Ansprüche, wobei die Druckverteilungskammer (17) über einen Krümmer (15) mit einer Verbrennungskammer (1) verbunden ist.

6. Verbrennungsmotor mit Druckverteilungskammer mit mehreren Einlässen nach einem der Ansprüche 1 bis 5, wobei die Druckverteilungskammer direkt über den in der Druckverteilungskammer definierten Auslass (16) mit der Verbrennungskammer (1) verbunden ist.

7. Verbrennungsmotor mit Druckverteilungskammer mit mehreren Einlässen nach Anspruch 1, wobei alle unabhängigen Einlässe zusätzlich zu den jeder Art von Einlass immanenten Systemen eine Drossel und Absperrklappen im Leerlauf (10, 24, 25) aufweisen.

8. Verbrennungsmotor mit Druckverteilungskammer mit mehreren Einlässen nach Anspruch 7, wobei, wenn er von einem Einlass oder mehreren Einlässen auf einen oder mehrere andere wechselt, die Absperrklappen der Anlassereinlässe geschlossen bleiben, wobei die Drossel oder die Absperrklappen (10, 24, 25) des ausgewählten Einlasses oder der ausgewählten Einlässe in Funktion bleiben.

9. Verbrennungsmotor mit Druckverteilungskammer mit mehreren Einlässen nach Anspruch 7 oder 8, wobei die Drossel und die Absperrklappen im Leerlauf der unabhängigen Einlässe bewegt werden und in der Lage sein sollen, Luft oder Luft-Kraftstoff in unterschiedlichen Mengen einzuführen, und somit in der Lage sein sollen, die Leistung des Motors nach Bedarf zu variieren.

## Revendications

1. Moteur à combustion interne à chambre de distribution de pression à admissions multiples, dans lequel la chambre de distribution de pression possède au moins deux admissions indépendantes fonctionnelles et dont chacune peut être sélectionnée de manière séparée ou combinée, dans lequel la chambre de distribution de pression est une chambre de distribution de pression (17) à multiples compartiments (18), possédant des moyens de contrôle d'accès à l'aide de vannes (19) de chacune des admissions à chaque compartiment, et avec des moyens de contrôle de flux d'un compartiment vers une sortie (16), **caractérisé en ce que** la chambre de distribution de pression (17) présente une section circulaire transversale et qu'elle est équipée d'un clapet rotatif (21) qui balaie la surface intérieure de la chambre pour qu'un compartiment ou un autre soit sélectionné lorsque le clapet tourne et agit sur les vannes d'accès (19) des admissions.

2. Moteur à combustion interne à chambre de distribution de pression à admissions multiples, selon la revendication 1, dans lequel une ou toutes les admissions indépendantes sont atmosphériques.

3. Moteur à combustion interne à chambre de distribution de pression à admissions multiples, selon la revendication 1, dans lequel une ou toutes les admissions indépendantes sont à air sous pression.

4. Moteur à combustion interne à chambre de distribution de pression à admissions multiples, selon la revendication 1, dans lequel une ou toutes les admissions indépendantes sont à réservoir à pression fixe ou rechargeable avec soupape de surpression qui peut être réglée soit manuellement, soit automatiquement.

5. Moteur à combustion interne à chambre de distribution de pression à admissions multiples, selon l'une quelconque des revendications précédentes, dans lequel la chambre de distribution de pression (17) est raccordée à une chambre de combustion (1) via un collecteur (15).

6. Moteur à combustion interne à chambre de distribution de pression à admissions multiples, selon l'une quelconque des revendications 1-5, dans lequel la chambre de distribution de pression est raccordée à la chambre de combustion (1) directement via la sortie (16) définie dans la chambre de distribution de pression.

7. Moteur à combustion interne à chambre de distribution de pression à admissions multiples, selon la revendication 1, dans lequel toutes les admissions indépendantes possèdent des vannes papillons d'accélération et de ralentissement (10, 24, 25) en plus des systèmes inhérents à chaque type d'admission.

8. Moteur à combustion interne à chambre de distribution de pression à admissions multiples, selon la revendication 7, dans lequel, lorsqu'il change d'une admission ou de plusieurs admissions à une autre ou à d'autres, les vannes papillons des admissions du démarreur restent fermées, avec l'accélérateur ou les vannes papillons (10, 24, 25) de l'admission ou des admissions sélectionnée(s) étant opérationnelles.

9. Moteur à combustion interne à chambre de distribution de pression à admissions multiples, selon la revendication 7 ou 8, dans lequel les vannes papillons d'accélération et de ralentissement des admissions indépendantes sont déplacées et sont en mesure d'introduire de l'air ou de l'air-carburant dans des quantités, à un débit et à une pression différents, et sont donc capables de modifier les performances du moteur en fonction des besoins.
